# EUROPÄISCHE PATENTANMELDUNG

(11) **EP 2 431 397 A1**
(43) Veröffentlichungstag der Anmeldung: **21.03.2012**
(21) Anmeldenummer: 11190596.4
(22) Anmeldetag: 14.12.2006
(51) Int. Cl.: C08G 2/10

(54) **Verfahren zur Herstellung von Oxymethylen-Polymeren in homogener Phase und Verwendung**

(30) Priorität: 24.12.2005 DE 102005062327
(62) Teilanmeldung aus: 06829590.6
(71) Anmelder: Ticona GmbH, 65843 Sulzbach (Taunus) (DE)
(72) Erfinder: Haubs, Michael, 55545 Bad Kreuznach (DE); Clauss, Joachim, 64297 Darmstadt-Eberstadt (DE); Hoffmockel, Michael, 65527 Niedernhausen (DE); Lingnau, Jürgen, 55130 Mainz-Laubenheim (DE); Schneller, Arnold, 64342 Seeheim-Jugenheim (DE)
(74) Vertreter: von Kreisler Selting Werner

(57) **Zusammenfassung**

Beschrieben wird ein Verfahren und eine Vorrichtung zur Herstellung von Oxymethylen-Polymeren. Dieses umfasst die Polymerisation von einem Oxymethylengruppen-bildenden Monomeren zusammen mit einem Acetal des Formaldehyds und einem Initiator der kationischen Polymerisation in homogener Phase bis zu 90 % des Maximalumsatzes gefolgt von der Deaktivierung des Reaktionsgem isches.

Die erhaltenen Oxymethylen-Polymeren weisen Alkylether-Endgruppen auf und sind äußerst stabil.

## Beschreibung

Die vorliegende Erfindung betrifft ein verbessertes Verfahren zur Herstellung von Oxymethylen-Polymeren sowie die Verwendung ausgewählter Oxymethylen-Polymerer.

Die Herstellung von Polyoxymethylenen ist an sich bekannt. Sie kann einer-seits durch anionische Polymerisation von wasserfreiem Formaldehyd, und andererseits durch die kationische Polymerisation von cyclischen Oligomeren des Formaldehyds, meist Trioxan, erfolgen. Die Polymerisation kann dabei sowohl in Masse (d.h. ohne Lösungsmittel) als auch in Lösung als Fällungspolymerisation sowie in der Schmelze in homogener Phase unter Druck erfolgen (DE 31 47 309 A1).

Bei der kationisch initiierten Variante der Polymerisation werden kationische Initiatoren eingesetzt. Nachteilig beim Einsatz von kationischen Initiatoren ist, daß diese auch Nebenreaktionen, wie den Hydridshift, katalysieren, der zu einem Molekulargewichtsabbau und zur Bildung von Formiat-Endgruppen führt. Nach erfolgter Polymerisation muß daher das Reaktionsgemisch schnell und vollständig desaktiviert werden. Dies wird typischerweise durch Zugabe von Basen zu der Polymerisationsmischung erreicht.

JP-A-04/114,003 und JP-A-04/145,114 beschreiben die Deaktivierung des Polymerisationskatalysators in Oxymethylen-Homo- oder ―Copolymerge-mischen durch Zugabe von Mischungen ausgewählter Oxide und Auf-schmelzen der Mischung.

Es ist bereits seit langem bekannt, die Stabilität von Oxymethylenpolymeren durch die Verkappung der Endgruppen, beispielsweise durch Einführung von Ether- oder Ester-Endgruppen, zu erhöhen. Beispiele dafür finden sich in den DE-AS-1,158,709, US-A-3,998,791, US-A-3,393,179, DE-A-1,445,255, D E-AS-1,158, 709, US-A-4,097,453 und US-A-3,161,616.

Während mit Ester-Endgruppen verkappte Oxymethylenpolymere bei erhöhten Temperaturen oder in basischen oder sauren Umgebungen abgebaut werden, zeichnen sich mit Ether-Endgruppen verkappte Oxymethylenpolymere durch eine sehr hohe Stabilität, insbesondere im basischen Milieu aus. Die bisher vorgeschlagenen Verfahren zur Herstellung dieser Polymeren umfassten jedoch stets einen separaten Schritt zur Verkappung der Polymeren. Diese separate Umsetzung führt zwar zu einer deutlich gesteigerten Stabilität der Polymeren; weitere Verbesserungen sind jedoch wünschenswert, da die Formaldehydemission bei der Weiterverarbeitung und Anwendung möglichst gering gehalten und nach Möglichkeit ganz ausgeschlossen werden soll.

Es besteht zudem ein ständiger Bedarf nach verbesserten Herstellungsverfahren, um dem allgegenwärtigen Kostendruck begegnen zu können.

Aus der DE-A-3147309 ist zwar die Herstellung von Oxymethylen-Polymeren in der Schmelze in homogener Phase unter Druck beschrieben. Die Umsetzung der Monomeren wird dort möglichst vollständig und bei vergleichsweise hohen Temperaturen durchgeführt. Es wäre wünschenswert, wenn die Reaktionstemperaturen erniedrigt werden könnten, um das Molekulargewicht der Reaktionsprodukte zu steigern und die Möglichkeit von Nebenreaktion sowie das Entstehen von Formiat-Endgruppen zu verringern.
Aufgabe der vorliegenden Erfindung ist das Bereitstellen eines einfachen Verfahrens zur Herstellung von Oxymethylen-Polymeren (nachstehend auch "POM" genannt) hoher Stabilität, das mit einfachen Mitteln und energetisch günstig durchzuführen ist.

Eine weitere Aufgabe der vorliegenden Erfindung ist die Bereitstellung eines Verfahrens zur Herstellung von POM hoher Stabilität, das eine schnelle und effiziente Deaktivierung der Reaktionsmischung gestattet.

Die vorliegende Erfindung betrifft ein Verfahren zur Herstellung von Oxymethylen-Polymeren der allgemeinen Formel I

R¹-(O-CH₂)ₙ-O-R² (I),

welche bis zu 0,5 Gew.-% einpolymerisierte Oxyethylengruppen und/oder bis zu 1 Gew.-% an Verzweigern enthalten können, worin R¹ und R² unabhängig voneinander Alkylreste sind und n eine ganze Zahl von größer oder gleich 500 bedeutet, umfassend die Maßnahmen:
i) Polymerisation eines -CH₂-O- Einheiten bildenden Monomeren in homogener Phase, in Gegenwart eines Acetals des Formal-dehyds und eines Initiators der kationischen Polymerisation,
ii) Abbruch der Polymerisation in homogener Phase vor dem Erreichen des thermodynamischen Gleichgewichts bei Erreichen von weniger als 90 % des Maximalumsatzes, durch
iii) Deaktivierung der aktiven Polymerketten in homogener Phase, indem das in Schritt i) hergestellte Polymerisat mit einer organischen oder anorganischen Base, die entweder gelöst oder dispergiert vorliegen kann, in Kontakt gebracht wird.

R¹ und R² bedeuten unabhängig voneinander Alkylreste, bevorzugt C₁ bis C₆ - Alkylreste, die insbesondere geradkettig sind. Ganz besonders bevorzugt sind R¹ und R² unabhängig voneinander Methyl, Ethyl, Propyl oder Butyl.

Index n ist der Zahlenmittelwert des Polymerisationsgrades und liegt vorzugsweise im Bereich von 500 bis 10.000, insbesondere im Bereich von 500 bis 3.000 . Für spezielle Anwendungen kann dieser Zahlenwert auch niedriger eingestellt sein.

Bei Schritt i) des erfindungsgemäßen Verfahrens handelt es sich um eine an sich bekannte Polymerisation von -CH₂-O- Einheiten bildenden Monomeren gegebenenfalls in Gegenwart von Verzweigern. Die Polymerisation erfolgt in homogener Phase, vorzugsweise in der Schmelze.

Dazu wird ein -CH₂-O- Einheiten bildendes Monomer oder ein Gemisch verschiedener Monomerer mit üblichen Initiatoren der kationischen Polymerisation und mit Acetalen des Formaldehyds als Regler in an sich bekannter Weise umgesetzt. Die Polymerisation erfolgt bei Drucken von 2 bis 500 bar, vorzugsweise bei Drucken zwischen 3 und 100 bar.

Die Polymerisationstemperatur liegt so hoch, daß das Polymer in der Reaktionsmischung gelöst bzw. aufgeschmolzen vorliegt, d.h. die Reaktionsmischung einphasig ist.

Typische Polymerisationstemperaturen für die Schmelzepolymerisation liegen oberhalb von 120 °C, vorzugsweise im Bereich von 125°C bis 180°C, besonders bevorzugt im Bereich von 135°C bis 160°C und ganz besonders bevorzugt im Bereich von 140 bis 150°C. Bevorzugte Drucke für die Schmelzepolymerisation bewegen sich im Bereich von 3 bis 100 bar, besonders bevorzugt im Bereich von 4 bis 60 bar.

Besonders der Temperaturbereich unterhalb von 150°C eignet sich für das erfindungsgemäße Verfahren, da hier das Ausmaß der Nebenreaktionen vergleichsweise gering ist und besonders stabile Verfahrensprodukte entstehen.

Im erfindungsgemäßen Verfahren wird der Polymerisationsansatz nicht vollständig bis zum Erreichen des thermodynamischen Gleichgewichts umgesetzt. Die Reaktion wird also vorzeitig durch Zugabe einer organischen oder anorganischen Base abgebrochen, d.h. bei einem Umsatz, der bis zu 90 % des unter den gegebenen Reaktionsbedingungen (Druck, Temperatur) erzielbaren Umsatzes ("Maximalumsatzes") entspricht. Vorzugsweise wird die Reaktion bei Erreichen von 50 bis 80 %, insbesondere von 60 bis 75 % des Maximalumsatzes abgebrochen. Diese Maßnahme gestattet ein Absenken der Reaktionstemperatur, da das Gemisch aus nicht umgesetztem Monomer und aus Polymer bei niedrigeren Temperaturen homogen bleibt als das vollständig umgesetzte Polymer.

In einer bevorzugten Verfahrensvariante werden Reaktionsdauer und Initiatorkonzentration so gewählt, daß die Konzentration von Formiatend-gruppen in der Polymerisationsmischung bei Beendigung von Schritt i) nicht mehr als 40 mmol/kg, bevorzugt nicht mehr als 30 mmol/kg und besonders bevorzugt nicht mehr als 20 mmol/kg beträgt. Formiatendgruppen entstehen durch eine Nebenreaktion (Hydridshift) und können zur Instabilität der Polymeren beitragen. Sie werden daher nach dem Deaktivierungsschritt iii) durch thermische Hydrolyse bzw. Thermolyse der Reaktionsmischung abgebaut.

Zur Herstellung der Oxymethylen-Polymeren wird ein -CH₂-O- Einheiten bildendes Monomer oder ein Gemisch verschiedener Monomerer in der oben beschriebenen Weise umgesetzt.

Bei den Oxymethylen-Polymeren handelt es sich im Allgemeinen um unverzweigte lineare Polymere, die in der Regel mindestens 99 mol-%, vorzugsweise mindestens 99,7 mol-%, insbesondere mindestens 99,9 mol-%, Oxymethyleneinheiten (-CH₂-O-) enthalten. Gewünschtenfalls können geringe Mengen von Verzweigern eingesetzt werden. Als Verzweiger werden beispielsweise drei- oder höherwertige Alkohole oder deren Derivate, vorzugsweise drei- bis sechswertige Alkohole oder deren Derivate, eingesetzt. Bevorzugte Derivate sind Formale, bei denen jeweils zwei OH-Gruppen mit Formaldehyd umgesetzt wurden, wie z. B 1,3-Dioxepan, welches besonders bevorzugt ist, sowie Epoxide. Üblicherweise beträgt die Menge an Verzweigern nicht mehr als 1 Gew.-%, bezogen auf die zur Herstellung der Oxymethylen-Polymeren verwendeten Gesamtmonomermenge, vorzugsweise nicht mehr als 0,3 Gew.-%.

Die Erfindung umfasst auch die Herstellung solcher Oxymethylen-Polymeren, die neben Oxymethylen- auch geringe Mengen an Oxyethylen-Einheiten enthalten. Der Anteil an Oxyethyleneinheiten liegt unter 0,5 Gew.-%, bevorzugt unter 0,2 Gew.-% und besonders bevorzugt unter 0,1 Gew.-%.

Die durch den Volumenschmelzindex MVR ausgedrückten Molekulargewichte dieser Polymeren können innerhalb weiter Bereiche schwanken. Typischer-weise weisen die Polymeren wiederkehrende Struktureinheiten der Formel -(CH₂-O-)ₙ- auf, wobei n den mittleren Polymerisationsgrad (Zahlenmittel) bedeutet und sich vorzugsweise im Bereich von 500 bis 10.000, insbesondere von 500 bis 3.000, bewegt.

Die erfindungsgemäß hergestellten Oxymethylen-Polymere leiten sich von Formaldehyd oder seinen cyclischen Oligomeren, wie Trioxan oder Tetroxan, ab.

Bevorzugt werden Oxymethylen-Polymere hergestellt, in welchen mindestens 80 %, vorzugsweise mindestens 90 %, ganz besonders bevorzugt mindestens 95 % und inbesondere mindestens 99 % aller Endgruppen Alkylethergruppen, insbesondere Methoxy- oder Ethoxygruppen sind. Ganz besonders bevorzugt hergestellte Oxymethylen-Polymere leiten sich von Trioxan ab.

Besonders bevorzugt eingesetzte -CH₂-O- Einheiten bildende Monomere sind Formaldehyd oder ganz besonders bevorzugt Trioxan.

Bei der Polymerisation in homogener Phase liegt die Polymerisationsmischung in flüssiger Form vor und verbleibt in diesem Zustand im Verlaufe der Polymerisation.

Das Molekulargewicht der entstehenden Homopolymeren läßt sich durch Einsatz von Acetalen des Formaldehyds (Kettenüberträger) einstellen . Diese führen auch zum Entstehen von veretherten Endgruppen des Homopolymeren, so daß eine separate Umsetzung mit Verkappungsreagenzien entbehrlich ist.

Als Kettenüberträger werden monomere oder oligomere Acetale des Formaldehyds eingesetzt.

Bevorzugte Kettenüberträger sind Verbindungen der Formel II

R¹-(O-CH₂)_{q}-O-R² (II),

worin R¹ und R² unabhängig voneinander einwertige organische Reste, vorzugsweise Alkylreste, wie Butyl, Propyl, Ethyl und insbesondere Methyl, und q eine ganze Zahl von 1 bis 100 bedeuten.

Besonders bevorzugte Kettenüberträger sind Verbindungen der Formel II, worin q=1 ist, ganz besonders bevorzugt Methylal.

Die Kettenüberträger werden üblicherweise in Mengen von bis zu 5.000 ppm, vorzugsweise von 100 bis 3.000 ppm, bezogen auf das Monomer(gemisch), eingesetzt.

Als Initiatoren kommen die üblicherweise bei der Herstellung von Oxymethylen-Homopolymeren eingesetzten kationischen Starter in Frage. Beispiele dafür sind Protonensäuren, wie fluorierte oder chlorierte Alkyl- und Arylsulfonsäuren, z.B. Trifluormethansulfonsäure, Trifluormethansulfonsäureanhydrid, oder Lewis-Säuren, wie z.B. Zinntetrachlorid, Arsenpentafluorid, Phosphorpenta-fluorid und Bortrifluorid, sowie deren Komplexverbindungen, wie z.B. Bortrifluorid-Etherate, und Carbokationenquellen, wie Triphenyl-methyl-hexafluorophosphat.

Die Initiatoren werden üblicherweise in Mengen von 0,005 bis 50 ppm, vorzugsweise von 0,01 bis 1 ppm, besonders bevorzugt von 0,02 bis 0,2 ppm, bezogen auf das Monomer(gemisch) eingesetzt.

Zur Beendigung der Polymerisation wird das homogene, flüssige Reaktionsgemisch, das neben Polymer noch nichtumgesetzte Monomere wie Trioxan und Formaldehyd enthält, mit einer organischen oder anorganischen Base in Kontakt gebracht. Diese können in Substanz oder mit einem inerten aprotischen Lösungsmittel verdünnt dem Polymerisationsansatz beigemischt werden. Dadurch werden die aktiven Kettenenden rasch und vollständig deaktiviert.

Als Basen können solche Verbindungen verwendet werden, die mit den aktiven Kettenenden in der Weise reagieren, daß die Polymerisationsreaktion beendet wird. Beispiele sind die organischen Basen Triethylamin oder Melamin sowie die anorganischen Basen Kaliumcarbonat oder Natriumacetat. Auch sehr milde organische Basen wie Carbonsäureamide, etwa Dimethylformamid können verwendet werden. Besonders bevorzugt sind tertiäre Basen wie Triethylamin und Hexamethylmelam in.

Die Basen werden in Konzentrationen von 1 ppm bis 1 Gew.-%, bezogen auf die Polymerisationsmasse, eingesetzt. Bevorzugt sind Konzentrationen von 10 ppm bis 5000 ppm.

Typische Deaktivierungstemperaturen bewegen sich im Bereich von 125 °C bis 180 °C, besonders bevorzugt im Bereich von 135 °C bis 160 °C und ganz besonders bevorzugt im Bereich von 140 °C bis 150 °C.

Typische Deaktivierungsdrucke bewegen sich im Bereich von 3 bis 100 bar, vorzugsweise von 4 bis 40 bar.

Polymerisation und Desaktivierung können in den für die Herstellung von POM-Homopolymeren bekannten Reaktoren erfolgen. Typischerweise setzt man Kneter, Extruder oder vorzugsweise mit statischen Mischern ausgelegte Rohrreaktoren ein, die temperierbar und druckfest ausgelegt sind.

Polymerisation und Deaktivierung können in einem Reaktor, beispielsweise einem Rohrreaktor, durchgeführt werden, wobei ein fließender Übergang zwischen Polymerisations- und Deaktivierungszone besteht, der lediglich durch die Zugabe der Deaktivierungslösung festgelegt ist. Beide Verfahrensschritte können aber auch in unterschiedlichen Aggregaten vorgenommen werden.

Besonders bevorzugt werden Schritte i) und ii) zwei hintereinander geschalteten Reaktoren ausgeführt, insbesondere in mit statischen Mischern versehenen Rohrreaktoren.

Die Polymerisationsdauer kann in weiten Bereichen schwanken und bewegt sich typischerweise im Bereich von 10 Sekunden bis 10 Minuten , vorzugsweise von 15 Sekunden bis 5 Minuten und besonders bevorzugt von 20 bis 100 Sekunden.

Die Deaktivierung verläuft sehr schnell und ist praktisch mit dem Vermischen der Komponenten beendet.

Nach der Deaktivierung der Initiatoren und des POM ist keine weitere Verkappung reaktiver Endgruppen mehr erforderlich.

Nach der Deaktivierung des POM wird dieses zur Entfernung von Restmonomeren und Lösungsmittel in eine Entspannungszone übergeführt und durch Anlegen eines verminderten Druckes werden Restmonomere und Lösungsmittel entfernt. Die Entfernung kann auch in mehreren Stufen erfolgen.

Die Entspannungszone wird von einem Raum gebildet, der von der heißen Polymerlösung bzw. Polymerschmelze ausgefüllt wird. Durch Anlegen eines Unterdruckes, vorzugsweise eines Druckes von weniger als 500 mbar, insbesondere von weniger als 200 mbar, wird der größte Teil der verbliebenen Monomer- und Lösungsmittelreste unter Ausnutzung der Temperatur der Polymerlösung aus dieser abgetrieben. Dieser Verfahrensschritt kann in einem abgetrennten Teil des Rohrreaktors durchgeführt werden, vorzugsweise in einem Extruder. Es können aber auch andere Aggregate, wie z.B. eine Flashkammer, verwendet werden. Bei unter Druck stehenden Polymerlösungen werden diese in der Entspannungszone zunächst auf Umgebungsdruck reduziert, bevor das Absaugen der Restmonomeren erfolgt.

Vorzugsweise wird dazu die Polymerlösung nach Schritt ii) unter Aufrecht-erhaltung des Druckes in einen Extruder übergeführt, in dem die Entspannung und das Absaugen der Monomer- und Lösungsmittelreste erfolgt.

Besonders bevorzugt wird ein Zweischneckenextruder verwendet.

In der Entspannungszone können gegebenenfalls bereits Stabilisatoren und Verarbeitungshilfsmittel (nachstehend auch "Zusätze" genannt) in das Homopolymerisat eingearbeitet werden.

In einer bevorzugten Variante des erfindungsgemäßen Verfahrens wird nach der Abtrennung der Monomer- und Lösungsmittelreste in den Extruder eine Mischung von Zusätzen eindosiert und in das heiße Polyoxymethylen-Homo-polymer eingearbeitet.

Als Komponenten der Mischung von Zusätzen lassen sich die üblicherweise zum Stabilisieren und/oder Modifizieren von Oxymethylen-Polymeren verwendeten Verbindungen einsetzen.

Dabei handelt es sich beispielsweise um Antioxidantien, Säurefänger, Formaldehydfänger, UV-Stabilisatoren oder Wärme-Stabilisatoren. Daneben kann die Mischung von Zusätzen Verarbeitungshilfen enthalten, beispielsweise Haftvermittler, Gleitmittel, Nukleierungsmittel, Entformungsmittel, Füllstoffe, Verstärkungsmaterialien oder Antistatika sowie Zusätze, die der Formmasse eine gewünschte Eigenschaft verleihen, wie Farbstoffe und/oder Pigmente und/oder Schlagzähmodifiziermittel und/oder elektrische Leitfähigkeit vermittelnde Zusätze, sowie Mischungen dieser Zusätze, ohne jedoch den Umfang auf die genannten Beispiele zu beschränken.

Nach dem Abtreiben der Monomer- und Lösungsmittelreste in der Entspannungszone wird die Polymerschmelze verfestigt. Dieses kann innerhalb oder unmittelbar nach dem Verlassen der Entspannungzone erfolgen. Anschließend wird das verfestigte und gegebenenfalls additivierte Homopolymerisat in an sich bekannter Weise granuliert.

In einer Extraktionsstufe können verbliebene Restmonomere und/oder Oligomere und/oder Lösungsmittel und/oder andere Verunreinigungen aus dem Homopolymerisat entfernt werden.

Granulieren und Extraktion kann in an sich bekannten Aggregaten erfolgen.

An die Extraktionsstufe schließt sich vorzugsweise eine Trocknung an, um das Granulat von Resten des anhaftenden Extraktionsmittels zu befreien.

Danach kann das POM gegebenenfalls in an sich bekannter Weise erneut aufgeschmolzen, mit Zusätzen versehen und erneut granuliert werden. In dieser Verfahrensstufe können insbesondere auch solche Zusätze zugefügt werden, die in der Extraktionsstufe aus dem Polymerisat herausgelöst würden.

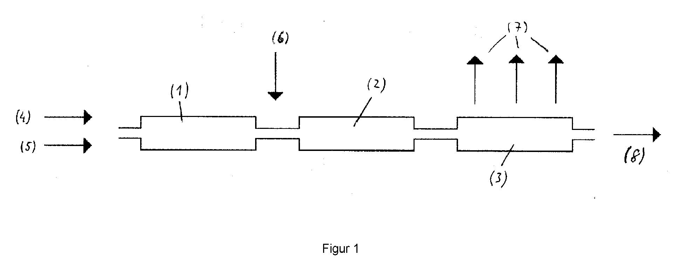

Eine bevorzugte Variante des erfindungsgemäßen Verfahrens ist in Figur 1 dargestellt.

Diese zeigt einen ersten Reaktor (1), einen dahinter geschalteten zweiten Reaktor (2), und einen dahinter geschalteten dritten Reaktor (3).

In den ersten Reaktor (1) wird ein Gemisch aus -CH₂-O-Gruppen bildendem Monomer, vorzugsweise Trioxan, zusammen mit einem Acetal des Formaldehyds (4), vorzugsweise Methylal, und einem Initiator der kationischen Polymerisation (5) eingeführt. Im ersten Reaktor (1) erfolgt die Polymerisation in homogener Phase, beispielsweise bei einer Temperatur von 145 °C und einem Druck von 50 bis 60 bar. Die mittlere Verweildauer des Reaktionsge-misches im ersten Reaktor beträgt etwa 50 Sekunden. Nach Erreichen von 50 bis 80 % des Maximalumsatzes (= Umsatz, der dem Erreichen des thermodynamischen Gleichgewichts entspricht) wird das Reaktionsgemisch in den zweiten Reaktor (2) transportiert. Dem Reaktionsgemisch wird ein Amin (6) gegebenenfalls gelöst in Trioxan zugefügt. Der Trioxangehalt im zweiten Reaktor (2) wird so eingestellt, dass dieser mindestens 10 Gew.-%, bezogen auf das Polymere, beträgt. Im zweiten Reaktor (2) wird die Temperatur des Reaktionsgemisches bei 145°C beibehalten oder leicht erhöht. Die mittlere Verweildauer des Reaktionsgemisches im zweiten Reaktor beträgt ebenfalls etwa 30 Sekunden. Unter den Druck- und Temperaturbedingungen im Reaktor liegt das Homopolymere flüssig im Gemisch mit Trioxan vor. Danach wird das Reaktionsgemisch in den dritten Reaktor (3) transportiert. Trixoan, Monomer-reste und gegebenenfalls weitere flüchtige Bestandteile (7) werden dem Reaktionsgemisch hier entzogen. Dieses erfolgt in der dargestellten Ausführungsform in mehreren Stufen. In diesem Reaktor kann eine nicht dargestellte Additivierung des POM-Hompolymeren erfolgen, d.h. Zugabe von beispielsweise Stabilisatoren und Verarbeitungshilfsmitteln, weiteren Zuschlag- und/oder Verstärkungsstoffen und/oder sonstigen Additiven und Hilfsstoffen. Das Endprodukt wird aus dem Reaktor als Stoffstrom (8) ausgeschleust.

In Figur 1 wird also ein bevorzugtes Verfahren beschrieben, das folgende Schritte umfasst:
a) Trioxan und Methylal werden in einem ersten Reaktor vorgelegt,
b) die Polymerisation wird durch Zugabe eines Initiators der kationischen Polymerisation bei solchen Drucken und Temperaturen gestartet, dass das Reaktionsgemisch als homogene Phase vorliegt,
c) das Reaktionsgemisch enthaltend das homogen verteilte Hompolymere wird nach Erreichen von 50 bis 80 % des Maximalumsatzes aus dem ersten Reaktor in einen zweiten Reaktor übergeführt, wobei
d) dem homogenen Reaktionsgemisch eine Base entweder in Substanz oder mit einem Lösungsmittel verdünnt zugesetzt wird, so dass die Polymerisation abgebrochen wird,
e) das Reaktionsgemisch aus dem zweiten Reaktor ausgetragen wird, und
f) das in Schritt d) deaktivierte Polymer vom Trioxan und von anderen flüchtigen Komponenten befreit wird.

Mit den erfindungsgemäßen Verfahren lassen sich mit Ether-Endgruppen stabilisierte Oxymethylen-Polymere mit hohem Molekulargewicht und mit außerordentlich hoher Stabilität erzeugen. Diese Polymeren sind erheblich stabiler, als die in der US-A-3,161,616 beschriebenen Polymeren. Es wird angenommen, dass das erfindungsgemäße Verfahren der direkten Einführung von Etherendgruppen eine nochmalige Verbesserung der Polymerstabilität zur Folge hat.

Die erfindungsgemäß hergestellten Oxymethylen-Polymeren weisen neben den oben angegebenen Etherendgruppen Volumenschmelzindizes von kleiner als 100 ml/10 min, vorzugsweise von 1,5 bis 40 ml/10 min auf (ermittelt nach DIN EN ISO 1133 bei 190 °C und einem Auflagegewicht von 2,16 kg).

Die erfindungsgemäß hergestellten Oxymethylen-Polymeren können in an sich bekannter Weise durch Formverfahren, beispielsweise durch Blasformen, Spritzguss oder Extrusion, zu Formkörpern weiterverarbeitet werden.

Die erfindungsgemäß hergestellten Oxymethylen-Polymeren zeichnen sich durch eine hohe chemische und thermische Stabilität aus und zeigen eine ausgezeichnete Schlagzähigkeit.

Die Erfindung betrifft auch die Verwendung der hergestellten Oxymethylen-Polymeren zur Herstellung von Formkörpern.

Das nachstehende Beispiel erläutert die Erfindung, ohne diese auf diese Ausführungsform zu beschränken.

### Beispiel

Die Reaktion wurde in einem mit statischen Mischelementen ausgestatteten Rohrreaktor durchgeführt. Der Rohrreaktor bestand aus vier Zonen, einer Vormischzone, einer Polymerisationszone, einer Desaktivierungszone und einer Zone, in der der Abbau der instabilen Ketten vorgenommen wurde. 300 kg/h Trioxan und 400 g/h Methylal in dem 75 ppm Trifluormethansulfonsäure gelöst waren, wurden über zwei separate Dosierpumpen in den Rohrreaktor dosiert und in der Vormischzone innerhalb von 0,5 Sekunden intensiv vermischt. In der sich direkt anschließenden Polymerisationszone mit einer Verweilzeit von 40 Sekunden entstand das Rohpolymer. Sowohl die Vormischung und als auch die Polymerisation wurden bei 145°C durchgeführt. Die Polymerisation wurde vorzeitig durch die Dosierung von 300 g/h Triethylamin, wiederum über eine Dosierpumpe, abgebrochen. Die Desaktivierung war innerhalb weniger Sekunden abgeschlossen. Der Abbau der instabilen Ketten fand direkt im Anschluss statt. Dazu wurde der Reaktormantel auf 185 °C aufgeheizt. Die Verweilzeit in dieser Zone betrug 20 Minuten. Am Reaktorausgang wurde ein Druck von 20 bar über ein Druckhalteventil eingestellt und in einen Doppelschneckenextruder entspannt, der bei 200 mbar betrieben wurde. Am Extruderausgang wurde das Polymer mittels einer Unterwassergranulierung in Granulat überführt. Es wurden 155 kg/h Polyacetalhomopolymer mit Schmelzindex 8,3 ml/10 min erhalten. Die Ausbeute von 51,7% verteilt sich rechnerisch auf einem Umsatz von 69% (Gleichgewichtsumsatz 80%) und einem Verlust von 25% durch Abbau von instabilen Ketten. Der Verlust wurde ermittelt über die Formaldehydmenge, die im Vakuumsystem absorbiert wurde.
1. Verfahren zur Herstellung von Oxymethylen-Homopolymeren der allgemeinen Formel I

   R¹-(O-CH₂)ₙ-O-R² (I),

   welche bis zu 0,5 Gew. % einpolymerisierte Oxyethylengruppen und/oder bis zu 1 Gew. % an Verzweigern enthalten können, worin R¹ und R² unabhängig voneinander Alkylreste sind und n eine ganze Zahl von größer gleich 500 bedeutet, umfassend die Maßnahmen:
   i) Polymerisation eines -CH₂-O- Einheiten bildenden Monomers in homogener Phase, in Gegenwart eines Acetals des Formaldehyds und eines Initiators der kationischen Polymerisation,
   ii) Abbruch der Polymerisation in homogener Phase vor dem Erreichen des thermodynamischen Gleichgewichts bei Erreichen von weniger als 90 % des Maximalumsatzes, durch
   iii) Deaktivierung der aktiven Polymerketten in homogener Phase, indem das in Schritt i) hergestellte Polymerisat mit einer organischen oder anorganischen Base, die entweder gelöst oder dispergiert vorliegen kann, in Kontakt gebracht wird.
2. Verfahren nach Punkt 1, dadurch gekennzeichnet, dass die Polymerisation in homogener Phase bei Temperaturen unterhalb von 155 °C, bevorzugt im Bereich von 140 bis 150 °C erfolgt.
3. Verfahren nach Punkt 1, dadurch gekennzeichnet, dass die Polymerisation in homogener Phase vor dem Erreichen des thermodynamischen Gleichgewichts bei Erreichen von 50 bis 80 %, insbesondere von 60 bis 75 % des Maximalumsatzes abgebrochen wird.
4. Verfahren nach Punkt 1, dadurch gekennzeichnet, dass Reaktionsdauer und Initiatorkonzentration bei der Polymerisation so gewählt werden, daß die Konzentration von Formiatendgruppen im Polymerisationsansatz bei Beendigung von Schritt i) nicht mehr als 40 mmol/kg beträgt.
5. Verfahren nach einem der Punkte 1 bis 4, dadurch gekennzeichnet, dass als ― CH₂-O- Einheiten bildendes Monomer Formaldehyd oder vorzugsweise Trioxan eingesetzt wird.
6. Verfahren nach einem der Punkte 1 bis 5, dadurch gekennzeichnet, dass als Acetal des Formaldehyds eine Verbindung der Formel II eingesetzt wird

   R¹-(O-CH₂)_{q}-O-R² (II),

   worin R¹ und R² unabhängig voneinander Alkylreste, vorzugsweise Methyl, sind und q eine ganze Zahl von 1 bis 100 bedeutet.
7. Verfahren nach Punkt 6, dadurch gekennzeichnet, dass als Acetal des Formaldehyds eine Verbindung der Formel II eingesetzt wird, in der q=1 ist, vorzugsweise Methylal.
8. Verfahren nach einem der Punkte 1 bis 7, dadurch gekennzeichnet, dass als Initiator der kationischen Polymerisation eine Lewis-Säure, eine Brönstedt-Säure oder eine Carbokationenquelle eingesetzt wird.
9. Verfahren zur Herstellung von Polymeren nach einem der Punkte 1 bis 8, dadurch gekennzeichnet, dass
   a) Trioxan und Methylal in einem ersten Reaktor vorgelegt werden,
   b) die Polymerisation durch Zugabe eines Initiators der kationischen Polymerisation bei solchen Drucken und Temperaturen gestartet wird, daß das Reaktionsgemisch als homogene Phase vorliegt,
   c) das Reaktionsgemisch enthaltend das homogen verteilte Oxymethylen-Polymere nach Erreichen von 50 bis 80 % des Maximalumsatzes aus dem ersten Reaktor in einen zweiten Reaktor übergeführt wird, wobei
   d) dem homogenen Reaktionsgemisch eine Base zugesetzt wird,
   e) das Reaktionsgemisch in einem Entgasungsextruder von flüchtigen Komponenten befreit wird,
   f) das Reaktionsgemisch aus dem zweiten Reaktor ausgetragen wird, und
   g) das in Schritt d) deaktivierte Polymer vom Trioxan und von anderen flüchtigen Komponenten befreit wird.
10. Verwendung der nach einem der Punkte 1 bis 9 hergestellten Oxymethylen-Polymeren zur Herstellung von Formkörpern.

## Patentansprüche

1. Verfahren zur Herstellung von Oxymethylen-Homopolymeren der allgemeinen Formel I
R¹-(O-CH₂)ₙ-O-R² (I),
welche bis zu 0,5 Gew. % einpolymerisierte Oxyethylengruppen und/oder bis zu 1 Gew. % an Verzweigern enthalten können, worin R¹ und R² unabhängig voneinander Alkylreste sind und n eine ganze Zahl von größer gleich 500 bedeutet, umfassend die Maßnahmen:
i) Polymerisation eines -CH2-O- Einheiten bildenden Monomers in homogener Phase bei einer Temperatur unterhalb von 155°C, in Gegenwart eines Acetals des Formaldehyds und eines Initiators der kationischen Polymerisation,
ii) Abbruch der Polymerisation in homogener Phase vor dem Erreichen des thermodynamischen Gleichgewichts bei Erreichen von 50 bis 80% des Maximalumsatzes, durch
iii) Deaktivierung der aktiven Polymerketten in homogener Phase, indem das in Schritt i) hergestellte Polymerisat mit einer organischen oder anorganischen Base, die entweder gelöst oder dispergiert vorliegen kann, in Kontakt gebracht wird.

2. Verfahren nach Anspruch 1, **dadurch gekennzeichnet, dass** die Polymerisation in homogener Phase bei Temperaturen im Bereich von 140 bis 150 0C erfolgt.

3. Verfahren nach Anspruch 1, **dadurch gekennzeichnet, dass** die Polymerisation in homogener Phase vor dem Erreichen des thermodynamischen Gleichgewichts bei Erreichen von 60 bis 75 % des Maximalumsatzes abgebrochen wird.

4. Verfahren nach Anspruch 1, **dadurch gekennzeichnet, dass** Reaktionsdauer und Initiatorkonzentration bei der Polymerisation so gewählt werden, daß die Konzentration von Formiatendgruppen im Polymerisationsansatz bei Beendigung von Schritt i) nicht mehr als 40 mmol/kg beträgt.

5. Verfahren nach einem der Ansprüche 1 bis 4, **dadurch gekennzeichnet, dass** als -CH ₂-O- Einheiten bildendes Monomer Formaldehyd oder vorzugsweise Trioxan eingesetzt wird.

6. Verfahren nach einem der Ansprüche 1 bis 5, **dadurch gekennzeichnet, dass** als Acetal des Formaldehyds eine Verbindung der Formel II eingesetzt wird
R¹-(O-CH₂)_{q}-O-R² (II),
worin R¹ und R² unabhängig voneinander Alkylreste, vorzugsweise Methyl, sind und q eine ganze Zahl von 1 bis 100 bedeutet.

7. Verfahren nach Anspruch 6, **dadurch gekennzeichnet, dass** als Acetal des Formaldehyds eine Verbindung der Formel II eingesetzt wird, in der q=1 ist, vorzugsweise Methylal.

8. Verfahren nach einem der Ansprüche 1 bis 7, **dadurch gekennzeichnet, dass** als Initiator der kationischen Polymerisation eine Lewis-Säure, eine Brönstedt-Säure oder eine Carbokationenquelle eingesetzt wird.

9. Verfahren zur Herstellung von Polymeren nach einem der Ansprüche 1 bis 8,
**dadurch gekennzeichnet, dass**
a) Trioxan und Methylal in einem ersten Reaktor vorgelegt werden,
b) die Polymerisation durch Zugabe eines Initiators der kationischen Polymerisation bei solchen Drucken und Temperaturen gestartet wird, daß das Reaktionsgemisch als homogene Phase vorliegt,
c) das Reaktionsgemisch enthaltend das homogen verteilte Oxymethylen-Polymere nach Erreichen von 50 bis 80 % des Maximalumsatzes aus dem ersten Reaktor in einen zweiten Reaktor übergeführt wird, wobei
d) dem homogenen Reaktionsgemisch eine Base entweder in Substanz oder mit einem Lösungsmittel verdünnt zugesetzt wird, so dass die Polymerisation abgebrochen wird,
e) das Reaktionsgemisch aus dem zweiten Reaktor ausgetragen wird, und
f) das in Schritt d) deaktivierte Polymer vom Trioxan und von anderen flüchtigen Komponenten befreit wird.

10. Verwendung der nach einem der Ansprüche 1 bis 9 hergestellten Oxymethylen-Polymeren zur Herstellung von Formkörpem.
